# EUROPÄISCHE PATENTSCHRIFT

(11) **EP 1 796 942 B1**
(45) Veröffentlichungstag und Bekanntmachung des Hinweises auf die Patenterteilung: **26.03.2008**
(21) Anmeldenummer: 05777892.0
(22) Anmeldetag: 15.08.2005
(51) Int. Cl.: B60R 21/01, B60R 21/00

(54) **SICHERHEITSSYSTEM FÜR FAHRZEUGINSASSEN**
SECURITY SYSTEM FOR THE OCCUPANTS OF A VEHICLE
SYSTEME DE SECURITE POUR LES OCCUPANTS D'UN VEHICULE

(30) Priorität: 01.10.2004 DE 102004047781
(43) Veröffentlichungstag der Anmeldung: 20.06.2007
(73) Patentinhaber: ROBERT BOSCH GMBH, 70442 Stuttgart (DE)
(72) Erfinder: MOLDENHAUER, Maike, 71111 Waldenbuch (DE)
(86) Internationale Anmeldenummer: PCT/EP2005/053992
(87) Internationale Veröffentlichungsnummer: WO 2006/037685

(56) Entgegenhaltungen:
- DE-A- 10 305 087
- US-A1- 2003 051 530
- US-A1- 2004 051 632
- US-B1- 6 609 053

## Beschreibung

### Stand der Technik

Die Erfindung betrifft ein Sicherheitssystem für Fahrzeuginsassen nach dem Oberbegriff des Anspruchs 1.

Im Bereich der Unfallforschung zu Frontcrashs wurden Untersuchungen durchgeführt, bei dem der Verlauf der bei dem Crash auftretenden Beschleunigung näherungsweise durch eine Pulsfunktion (Rechteck, halber Sinus, Dreieck) dargestellt wurde. Dies ist in der Literaturstelle Agaram, V., Xu,L., Wu,J., Kostyniuk,G., Nusholtz,G. "Comparison of Frontal Crashes in Terms of Average Acceleration", SAE Technical Paper 2000-01-0880, Society of Automotive Engineers, Warrendale, PA,2000, beschrieben. Eine derartige Näherung wird auch eingesetzt, um die Unterschiede zwischen realen Crashs zwischen Fahrzeugen und den für Crashversuche häufig eingesetzten Fahrzeug-Barriere-Crashs zu bewerten.

Aus Varat,M.S., Husher,S.E.,"Crash Pulse Modeling For Vehicle Safety Research, 18th ESV Paper, KEVA Engineering, USA, Paper 501, ist es weiter bekannt, eine Crashpulsnäherung in Gestalt einer Sinusquadratfunktion einzusetzen, um Crashverläufe bei unterschiedlichen Geschwindigkeiten zu simulieren.

Durch neue Fahrzeugkonstruktionen und die Verwendung neuer Werkstoffe, wie insbesondere Kunststoffe, im Fahrzeugbau treten in der Praxis neuartige Probleme auf, die die Erkennung von crashbedingten Signalen stark erschweren. Bereits kleine Erschütterungen, die beispielsweise schon beim Zuschlagen einer Fahrzeugtür auftreten, führen zu einem mit starken Schwingungen überlagerten Signal hoher Amplitude. Besondere Schwierigkeiten treten dann noch bei der Erkennung eines Seitencrashs auf, da hier nur ein vergleichsweise kurzer Zeitraum, in der Größenordnung weniger Millisekunden, für die Crasherkennung zur Verfügung steht.

Aus US 2003/0051530 A1 ist es bekannt, den Schwellwert für von einem Beschleunigungssignal abgeleitete Merkmale in Abhängigkeit von einem Umfeldsignal zu verändern. Der Schwellwert wird genutzt, um die Zündzeit für Rückhaltemittel zu bestimmen. Insbesondere werden Klassifizierungsansätze hinsichtlich der Geschwindigkeit vorgeschlagen.

### Vorteile der Erfindung

Das erfindungsgemäße Sicherheitssystem und das erfindungsgemäße Verfahren für die Steuerung eines Sicherheitssystems ermöglichen nun, trotz dieser beschriebenen Schwierigkeiten, eine zuverlässige und frühzeitige Erkennung einer Crashsituation und dadurch auch eine rechtzeitige Aktivierung von Rückhaltemitteln, wie Gurtstraffer und/oder Airbags, um die Fahrzeuginsassen im Fall drohender Gefahr besser zu schützen. Im besonderen Maße gilt dies auch bei einem zeitkritischen Seitencrash. Das erfindungsgemäße Sicherheitssystem ist einerseits empfindlich genug, um kritische Situationen frühzeitig zu erkennen. Auf der anderen Seite zeichnet es sich jedoch durch eine hohe Robustheit gegen Fehlauslösungen aus. Dadurch wird die Betriebssicherheit eines Fahrzeugs insgesamt wesentlich verbessert. Die Erfindung macht sich die Erkenntnis zunutze, dass durch die Auswertung einer Geschwindigkeitsverlaufsanalysefunktion (VPAF = Velocity Progression Analysis Function) eine besonders sichere und zuverlässige Crasherkennung ermöglicht wird. Das Sicherheitssystem umfasst zu diesem Zweck Speichermittel, in denen ein durch einen Referenzcrash gewonnenes Beschleunigungssignal und eine daraus durch Integration abgeleitete erste Geschwindigkeitsfunktion gespeichert sind. Besonders vorteilhaft wird für den Referenzcrash eine näherungsweise Funktion, beispielsweise eine Sinus-Funktion oder eine Sinus-Quadrat-Funktion ausgewählt. Weiterhin umfasst das Sicherheitssystem Sensoren oder Kombinationen von Sensoren für die Erfassung von Beschleunigungs- und Drucksignalen, und/oder Körperschallsignalen, usw., die bei einem tatsächlichen Crash auftreten. Weiterhin umfasst das Sicherheitssystem auch ein Steuergerät und Vergleichsmittel. In diesem Steuergerät wird aus dem von dem aktuellen Crash abgeleiteten Beschleunigungssignal ein zweites Geschwindigkeitssignal gebildet. In den Vergleichsmitteln werden die Geschwindigkeitssignale des Referenzcrashs und des realen Crashsignals miteinander verglichen, um eine Geschwindigkeitsverlaufsanalysefunktion zu gewinnen. Weiterhin sind in dem Steuergerät Schwellwerte vorgesehen, mit denen die Werte der Geschwindigkeitsverlaufsanalysefunktion verglichen werden. Ein Überschreiten der vorgebbaren Schwellwerte ist ein Maß für die jeweilige Crashstärke und die damit einhergehende Bedrohung der Fahrzeuginsassen. Gekoppelt an das Erreichen einer bestimmten Crashstärke können Rückhaltemittel aktiviert werden.

### Zeichnung

Ein Ausführungsbeispiel der Erfindung wird nachfolgend unter Bezug auf die Zeichnung näher beschrieben. Dabei zeigt
- Figur 1: ein Blockschaltbild eines Sicherheitssystems,
- Figur 2: ein Diagramm mit Darstellung des Beschleunigungsverlaufs als Funktion der Zeit bei einem Referenzcrash,
- Figur 3: ein Diagramm mit Darstellung des Geschwindigkeitsverlaufs als Funktion der Zeit bei einem Referenzcrash und einem realen Crash,
- Figur 4: ein Diagramm mit Darstellung der Geschwindigkeitsverlaufsanalysefunktion als Funktion der Zeit.

### Beschreibung der Ausführungsbeispiele

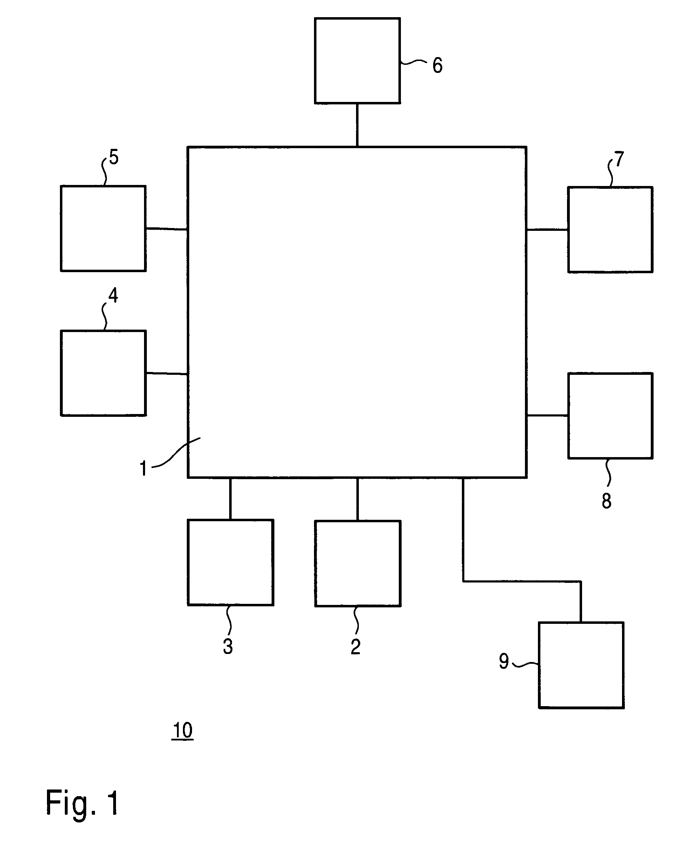

Ausführungsbeispiele der Erfindung werden im Folgenden unter Bezug auf die Zeichnung näher erläutert. Dabei zeigt Figur 1 ein Blockschaltbild eines Sicherheitssystems. Das Sicherheitssystem 10 umfasst ein Steuergerät 1. Mit dem Steuergerät 1 sind Sensoren 4,5 verbunden. Wenigstens einer der Sensoren 4,5 ist in der Lage, Beschleunigungen zu erfassen. Der zweite Sensor kann beispielsweise für Druckwerte empfindlich sein, die bei einem Crash, insbesondere einem Seitencrash, auftreten. Mit dem Steuergerät 1 sind Speichermittel 6 verbunden. Weiterhin sind mit dem Steuergerät Rückhaltemittel 7,8, wie insbesondere Airbags und Gurtstraffer verbunden. Weiterhin sind mit dem Steuergerät 1 Schwellwertmodule 2,3 verbunden. Schließlich sind mit dem Steuergerät 1 noch Vergleichsmittel 9 verbunden. Die in dem schematischen Blockschaltbild in Figur 1 getrennt von dem Steuergerät 1 dargestellten Blöcke der Komponenten 2,3,6 und 9 können auch Bestandteile des Steuergeräts 1 selbst sein.

Im Folgenden wird ein Steuerungsverfahren für die Steuerung des in Figur 1 dargestellten Sicherheitssystems 10 beschrieben.

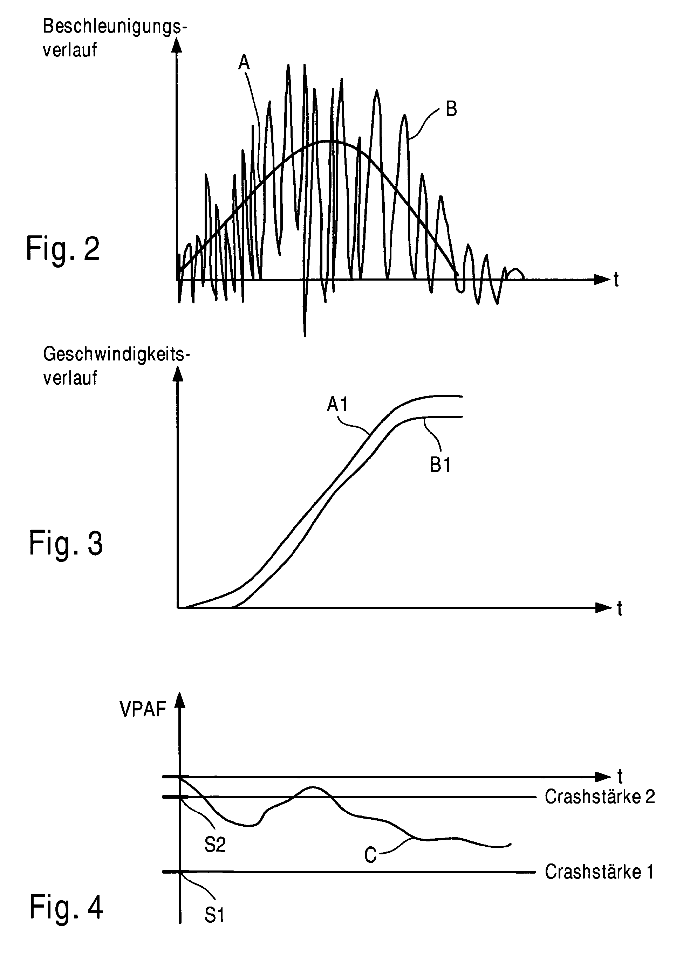

Figur 2 zeigt zunächst ein Diagramm mit Darstellung von Beschleunigungssignalen als Funktion der Zeit t. In dem Diagramm sind zwei Kurvenverläufe dargestellt. Die Kurve B entspricht dem Beschleunigungssignal, das bei einem Referenzcrash gewonnen wurde. Die Kurve stellt eine hochfrequente Schwingung mit zahlreichen Maxima und Minima dar. Die Kurve A in Figur 2 repräsentiert eine Annäherung dieser Beschleunigungskurve eines realen Referenzcrashs durch eine zweckmäßig gewählte Näherungsfunktion. In einer ersten Ausführungsvariante des erfindungsgemäßen Steuerungsverfahrens wird dafür die Sinus-Funktion ausgewählt. In einer weiteren Ausführungsvariante der Erfindung kann die Sinus-Quadrat-Funktion gewählt werden. Das Diagramm in Figur 3 zeigt den Geschwindigkeitsverlauf als Funktion der Zeit t, der durch zeitliche Integration aus dem Beschleunigungssignal abgeleitet wird. Dargestellt sind wiederum zwei Kurven A1 und B1. Die Kurve A1 zeigt dabei den Geschwindigkeitsverlauf eines durch eine Näherungsfunktion angenäherten Referenzcrashs. Also beispielsweise eine Kosinus-Funktion, die durch zeitliche Integration einer als Näherungsfunktion für einen Referenzcrash eingesetzten Sinus-Funktion entstanden ist. Die Kurve B1 zeigt im Vergleich dazu den Geschwindigkeitsverlauf bei einem realen Crash.

Figur 4 zeigt ein Diagramm mit Darstellung der Geschwindigkeitsverlaufsanalysefunktion VPAF als Funktion der Zeit t. Die Funktion VPAF wird gewonnen durch Differenzbildung zwischen den in Figur 3 dargestellten Funktionen A1 und B1 und durch eine zeitliche Mittelwertbildung dieser Differenz. Zusätzlich sind in das Diagramm in Figur 4 zwei Schwellwerte S1, S2 eingezeichnet, die zweckmäßig durch die in Figur 1 dargestellten Schwellwertmodule 2,3 vorgebbar sind. Diese Schwellwerte S1, S2 entsprechen einer bestimmten Crashstärke. So entspricht der Schwellwert S2 einer Crashstärke 2 und der Schwellwert S1 einer Crashstärke 1. Durch die Definition der Schwellwerte S1, S2, bzw. der diesen Schwellwerten zugeordneten Crashstärke 1,2 kann eine Risikobewertung des für die Insassen des Fahrzeugs bestehenden Risikos erfolgen und festgelegt werden, wann und ggf. welche Rückhaltemittel 7,8 zu aktivieren sind. So kann beispielsweise festgelegt werden, dass reversible Gurtstraffer aktiviert werden, wenn die Funktionswerte der Funktion VPAF den vorgebbaren Schwellwert S2 überschreiten. Weiterhin kann festgelegt werden, dass Airbags ausgelöst werden, wenn die Funktionswerte der Funktion VPAF den vorgebbaren Schwellwert S1 überschreiten. Hierbei wird angenommen, dass die Crashstärke 1 größer ist als die Crashstärke 2. In weiteren Ausführungsvarianten der Erfinden können auch noch stärker abgestufte Schwellwerte S, also mehr als zwei Schwellwerte S1, S2, vorgesehen werden, um eine stärker differenzierte Auslösung von Rückhaltemitteln 7,8 für den Schutz der Insassen zu ermöglichen.

### Bezugszeichenliste

- 1: Steuergerät
- 2: Schwellwertmodul
- 3: Schwellwertmodul
- 4: Sensor
- 5: Sensor
- 6: Speichermittel
- 7: Rückhaltemittel
- 8: Rückhaltemittel
- 9: Vergleichsmittel
- 10: Sicherheitssystem
- S: Schwellwert
- S1: Schwellwert
- S2: Schwellwert

## Patentansprüche

1. Verfahren für die Steuerung eines Sicherheitssystems (10)für Fahrzeuginsassen, **dadurch gekennzeichnet, dass** ein erstes Beschleunigungssignal wenigstens eines Referenzcrashs und/oder ein durch Integration aus diesem Beschleunigungssignal abgeleitetes erstes Geschwindigkeitssignal in Speichermitteln (6) gespeichert werden, dass aus einem in Echtzeit gemessenen zweiten Beschleunigungssignal durch Integration ein zweites Geschwindigkeitssignal gebildet wird, das aus dem ersten und dem zweiten Beschleunigungssignal durch Vergleich des ersten und zweiten Geschwindigkeitssignals eine Geschwindigkeitsverlaufsanalysefunktion (VPAF) gewonnen wird, dass diese Geschwindigkeitsverlaufsanalysefunktion mit wenigstens einem Schwellwert (S1,S2)verglichen wird, und dass bei Überschreiten des Schwellwerts (S1,S2) Rückhaltemittel (7,8) für die Fahrzeuginsassen aktiviert werden.

2. Verfahren nach Anspruch 2, **dadurch gekennzeichnet, dass** die Geschwindigkeitsverlaufsanalysefunktion (VPAF) gewonnen wird durch die Bildung eines zeitlichen Mittelwerts aus der Differenz des ersten und zweiten Geschwindigkeitssignals.

3. Verfahren nach Anspruch 1 oder 2, **dadurch gekennzeichnet, dass** das Beschleunigungssignal des Referenzcrashs durch eine Näherungsfunktion angenähert wird.

4. Verfahren nach einem der vorhergehenden Ansprüche, **dadurch gekennzeichnet, dass** als Näherungsfunktion die Sinus-Funktion verwendet wird.

5. Verfahren nach einem der vorhergehenden Ansprüche, **dadurch gekennzeichnet, dass** als Näherungsfunktion die Sinus-Quadrat-Funktion verwendet wird.

## Claims

1. Method for controlling a safety system (10) for vehicle occupants, **characterized in that** a first acceleration signal of at least one reference crash, and/or a first speed signal derived from this acceleration signal by integration are stored in storage means (6), **in that** a second speed signal is formed by integration from a second acceleration signal measured in real time, **in that** a speed profile analysis function (VPAF) is obtained from the first and the second acceleration signals by comparing the first and second speed signals, **in that** this speed profile analysis function is compared with at least one threshold value (S1, S2), and **in that** restraining means (7, 8) for the vehicle occupants are activated upon overshooting of the threshold value (S1, S2).

2. Method according to Claim 2, **characterized in that** the speed profile analysis function (VPAF) is obtained by forming a time average from the difference of the first and second speed signals.

3. Method according to Claim 1 or 2, **characterized in that** the acceleration signal of the reference crash is approximated by an approximation function.

4. Method according to one of the preceding claims, **characterized in that** the sine function is used as approximation function.

5. Method according to one of the preceding claims, **characterized in that** the sine squared function is used as approximation function.

## Revendications

1. Procédé de commande d'un système de sécurité (10) pour les occupants d'un véhicule,
**caractérisé en ce qu'**
on enregistre en mémoire un premier signal d'accélération d'au moins une collision de référence et/ou d'un premier signal de vitesse déduit par intégration de ce signal d'accélération dans une mémoire (6),
à partir d'un second signal d'accélération mesuré en temps réel par intégration, on forme un second signal de vitesse que l'on récupère du premier et du second signal d'accélération par comparaison du premier et du second signal de vitesse pour une fonction d'analyse de la courbe de vitesse (VPAF),
on compare cette fonction d'analyse de la courbe de vitesse à au moins un seuil (S1, S2) et
en cas de dépassement du seuil (S1, S2) on active les moyens de retenue (7, 8) pour les occupants du véhicule.

2. Procédé selon la revendication 1,
**caractérisé en ce qu'**
on applique une fonction d'analyse de la courbe de vitesse (VPAF) en formant la valeur moyenne dans le temps de la différence du premier et du second signal de vitesse.

3. Procédé selon la revendication 1 ou 2,
**caractérisé en ce qu'**
on fait une approximation du signal d'accélération de la collision de référence par une fonction d'approximation.

4. Procédé selon l'une des revendications précédentes,
**caractérisé en ce que**
on utilise une fonction sinus comme fonction d'approximation.

5. Procédé selon l'une des revendications précédentes,
**caractérisé en ce que**
on utilise une fonction sinuscarré (sinus)² comme fonction d'approximation.
